# EUROPEAN PATENT APPLICATION

(11) **EP 4 303 562 A1**
(43) Date of publication of application: **10.01.2024**
(21) Application number: 22183912.9
(22) Date of filing: 08.07.2022
(51) Int. Cl.: G01N 15/02

(54) **THE METHOD AND SYSTEM OF PERFORMING SHAPE AND SIZE ANALYSIS OF ALL SOLID PARTICLES WITH IMAGE PROCESSING**

(71) Applicant: Socar Turkey Arastirma Gelistirme Ve Inovasyon A.S., Istanbul (TR)
(72) Inventor: Deliismail, Ozgun, Izmir (TR); Sarrafi, Sahin, Izmir (TR); Boy, Onur Can, Izmir (TR); Tuncer, Basak, Izmir (TR)
(74) Representative: Sevinç, Cenk

(57) **Abstract**

The present invention relates to the method and the system of performing shape and size analysis of all solid particles with image processing.

## Description

### Technical Field of the Invention

The present invention relates to the method and the system of performing shape and size analysis of all solid particles with image processing.

### Background of the Invention

In industrial applications (reaction, purification, etc.), raw materials or solid particles supporting the process can be used. Due to the nature of the process and the durability of solid particles, their shape deforms over time and affects the process. For example, a product consisting of solid particles may not be suitable for sale due to the wrong size distribution. Another example is the catalyst fragments used in the reactions. These catalyst parts break as a result of the reactions and lose their properties, and the catalyst change time can be determined more accurately after the size analysis. In further analysis, by using data science methods, the size of the particles and the factors affecting them can be examined and the factors affecting the breaking of these particles can be revealed. With detailed color analysis, impurities on these particles can be detected. In real-time production lines, the properties of raw materials fed as solid particles can be determined as color and impurity, and instant operation changes can be made.

Particle size analysis is used to characterize the size distribution of particles in a given sample. Particle size analysis can be applied to solid materials, suspensions, emulsions, and even aerosols. There are many different methods employed to measure particle size. Some particle sizing methods can be used for a wide range of samples, but some can only be used for specific applications. It is quite important to select the most suitable method for different samples as different methods can produce quite different results for the same material.

Particle size analysis is a very important test and is used for quality control in many different industries. Minor modifications are desired to be able to analyze the shape, color, and size of solid particles in various industries for operational convenience. In just about every industry where milling or grinding is used, particle size is a critical factor in determining the efficiency of manufacturing processes and the performance of the final product.

The document numbered "JP2014521967" and named" Optical detection and analysis of particles" in the state of the art is related to a method of analyzing a sample comprising sub-micron particles, comprising determining first information about the size of particles and number of particles in the sample by nanoparticle tracking analysis. The method enables obtaining more accurate information about relatively smaller particles. The invention does not include online or offline operation, calibration, control loops during real-time testing, or problems with solid particles overlapping.

The document numbered "JP03349353B2" and named" the solid particle component analysis apparatus using a laser" in the state of the art is related to measuring solid particulate components rapidly with high accuracy at a low cost so as to be able to control a boiler or the like using the measured result. This device is provided with a laser for irradiating solid particles with laser beams so as to generate plasma light, a spectroscope making plasma light enter to generate spectral light and having a plurality of diffraction gratings different in wavelength resolution, a charge-coupled device camera that photographs the spectral light and outputs its image, and a computer for inputting this image and measuring solid particulate components. A sample conveying device is thereby dispensed with, and solid particulate components can be measured at the rear time. The invention does not include online or offline operation, calibration, control loops during real-time testing, or problems with solid particles overlapping.

The document named "Solid Particle Measurement by Image Analysis" in the state of art is related to methods of image and analysis for measuring solid particles that can be classified as one-dimensional, two, or three-dimensional. This document analyzes and evaluates several existing methods of solid particle measurement, such as Chord sizing, (multiple) Ferret diameter, equivalent circle, maximum diameter, equivalent ellipse, etc. in image analysis. A technology using ellipses, and circulars are needed for analysis to be more certain. The use of these shapes is advantageous in analyzing the catalyst parts.

The document named "Image Analysis of Particles" in the state of the art is explained particle sizes and shapes can be determined with photos of the particles. Since a typical particle sample consists of a range of sizes and shapes, modern analysis is done with a computer that automatically analyzes particle images to rapidly determine size and shape. Data from a large number of particles can then be summarized into distributions that describe the sample. There is a need for a technology that allows the separation of overlapping catalyst parts.

Analysis of solid particles is traditionally done with sieves of discrete and various sizes. However, in this case, it is difficult to analyze in the desired detail due to the constraints in the variety of trays used in the sieves. In addition, due to the structure of the holes in the trays, there are uncertainties in the results of the analysis of solid particles other than spherical type.

Another disadvantage of the state of the art is that in the sieve method, the product to be analyzed must not absorb moisture or must be dried beforehand. At the same time, the analysis time is longer with test sieves. Samples with a wide particle distribution require the use of a large number of sieves.

Another disadvantage of the state of the art is that even if the analyzes are made, the products in this field are generally far from digital infrastructure and manual post-analysis efforts are needed. In this situation, there is a need for an industrial product that can meet the above needs.

### Summary of the Invention

The object of the invention is to enable performing shape and size analysis of all solid particles using image processing. Therefore, cameras, servers, and relatively simple micro boards are included to carry out local computations and to communicate with the server used in the invention. The camera takes a picture of solid particles on the analysis tray and sends it to the computer to analyze.

Another object of the invention is to analyze in desired detail. It is ensured that the dimensions of particles with dimensions over 1 mm are analyzed with high precision using relatively cheap cameras. More detailed product analysis can be performed by adjusting or implementing a higher resolution camera with a convenient setting and sensitivity.

Another object of the invention is to solve all software problems remotely and simultaneously with the cloud and web-service structure and locally if needed.

Another object of the invention is to prevent errors caused by the overlapping of solid particles after they are placed on the analysis tray by the Watershed algorithm. Therefore, image processing that prevents erroneous analysis has been defined.

Another object of the invention is to provide a more accurate analysis by using a homogeneous and repeatable light, combined with a lightproof exterior structure to eliminate the impact of the surroundings. Therefore, LED light is a more preferable choice to ensure a more homogenous intensity distribution in the invention, but other light sources are applicable, as well.

Another object of the invention is to provide a system that can work without an internet connection. The system developed with the invention works in two modes. These modes are the state with an internet connection and the state without an internet connection. In case the system does not have an internet connection, all software is calculated in the local processor (micro board) and the results are saved to USB with a pre-defined report format and delivered to the user through the embedded LCD screen. LCD screen contains several UI tools to demonstrate different analysis results.

Another object of the invention is to act according to the user membership type. The server controls the number of analyzes and the type of tests that can be performed according to the user's membership type; unlike the case, the user is authorized to run unlimited tests under pre-specified user capability which is determined by subscription options.

Another object of the invention is to detect the origin of the analysis request and as a precaution against cyberattacks for online use. Therefore, the user must obtain a password at the end of membership and deliver the relevant e-mail address in this invention while sending the image for the analysis.

### Brief Description of the Drawings

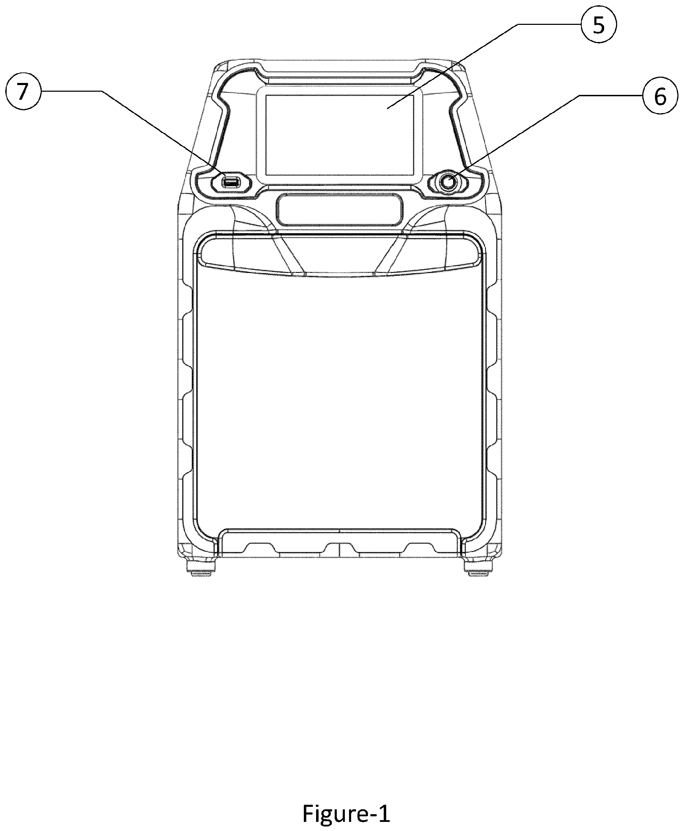

**Figure 1****:** Front view of the system of performing shape and size analysis of all solid particles with image processing.

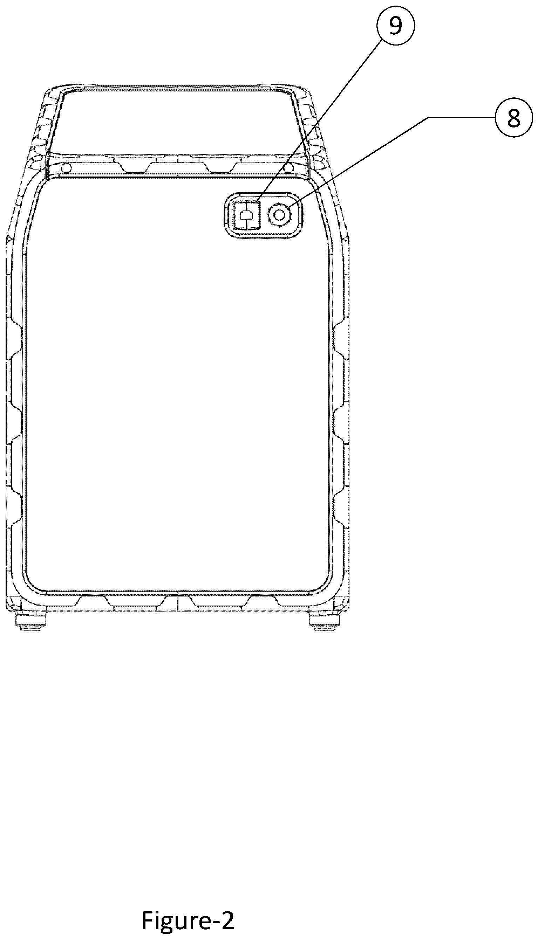

**Figure 2****:** Back view of the system of performing shape and size analysis of all solid particles with image processing.

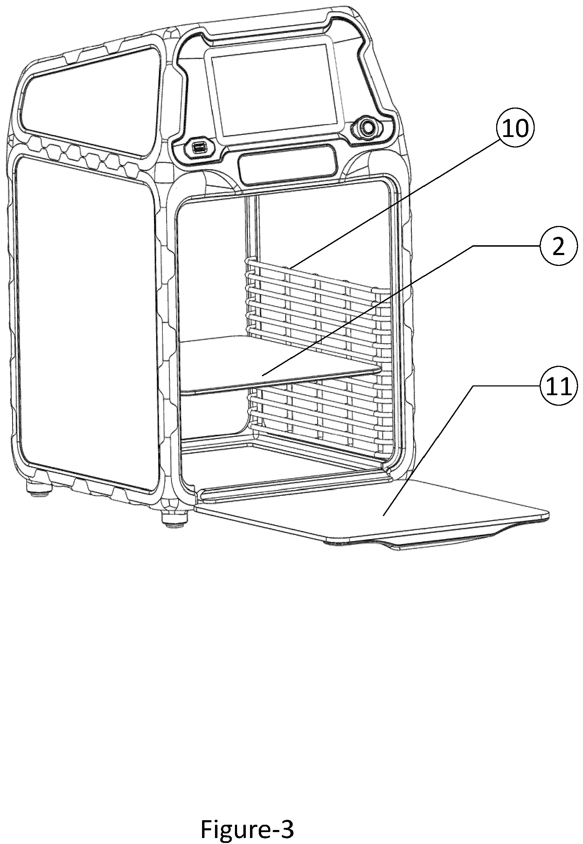

**Figure 3****:** Representation of the interior of the system for performing shape and size analysis of all solid particles with image processing.

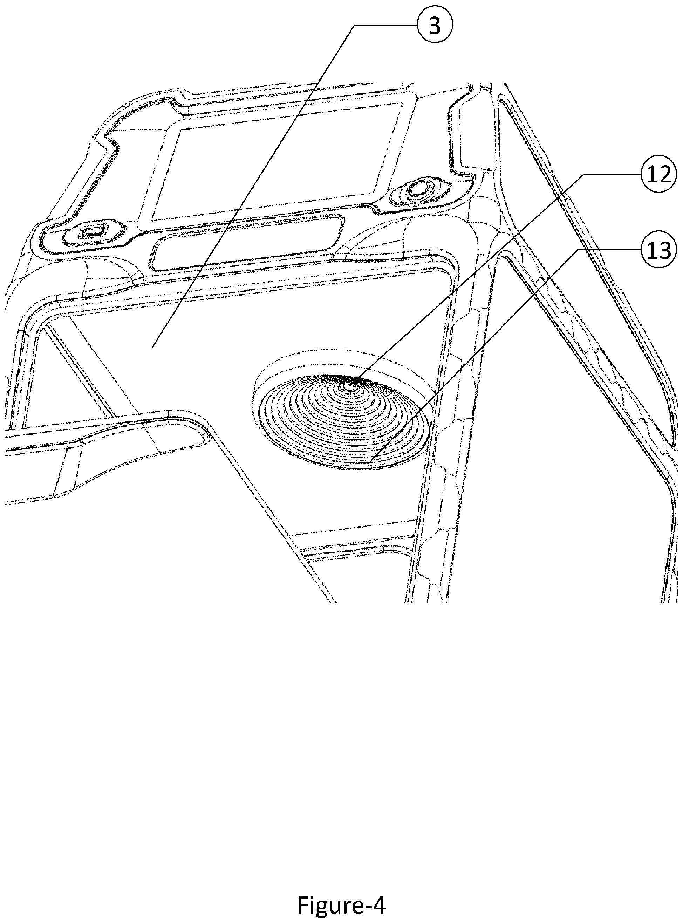

**Figure 4****:** Ceiling of the system for performing shape and size analysis of all solid particles with image processing.

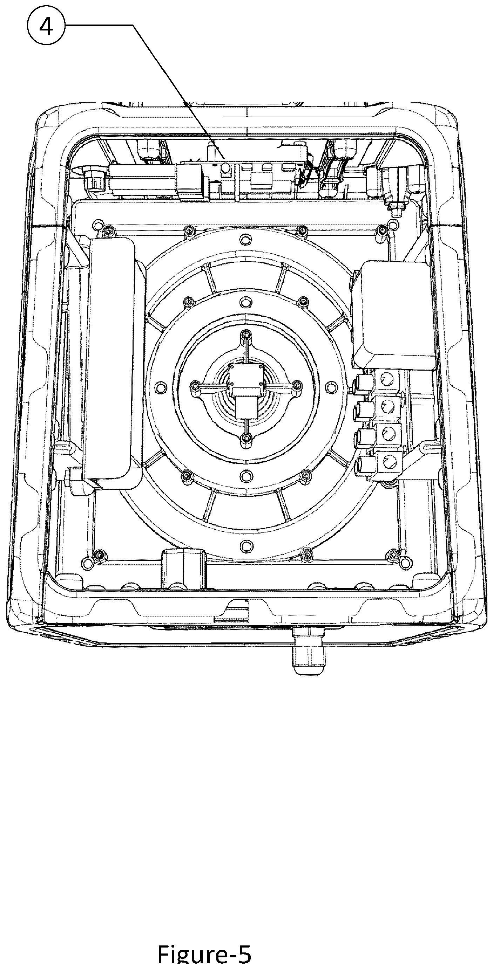

**Figure 5****:** Interior part of the system for performing shape and size analysis of all solid particles with image processing.

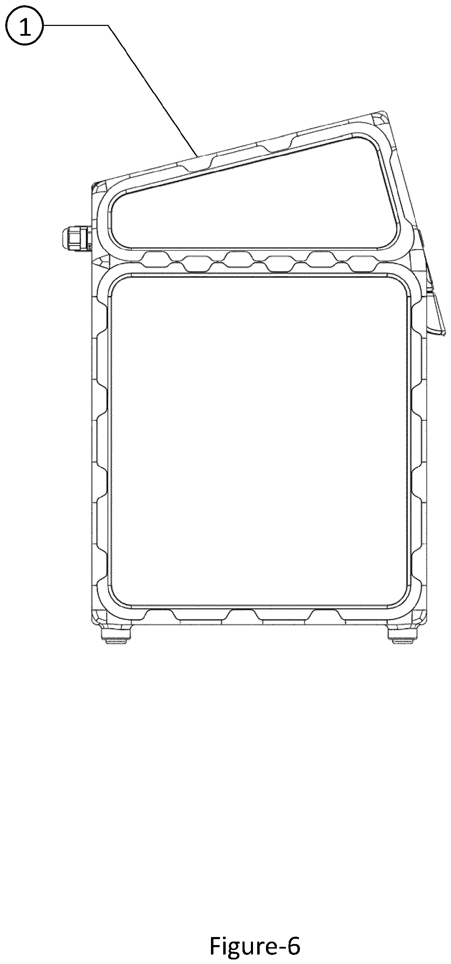

**Figure 6****:** Left side view of the system for performing shape and size analysis of all solid particles with image processing.

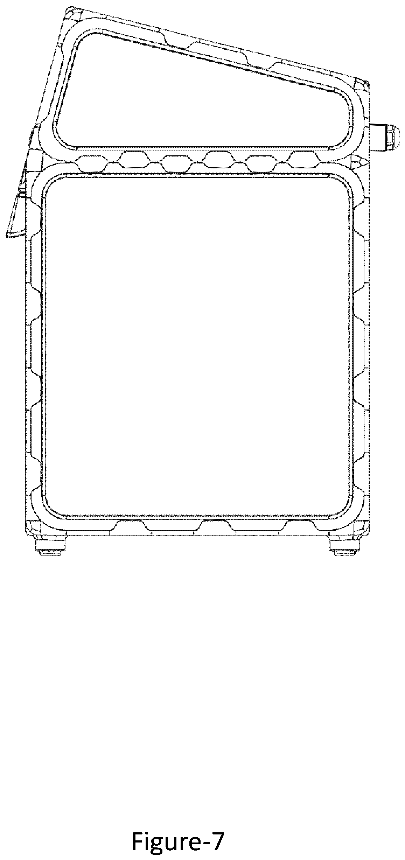

**Figure 7****:** Right side view of the system for performing shape and size analysis of all solid particles with image processing.

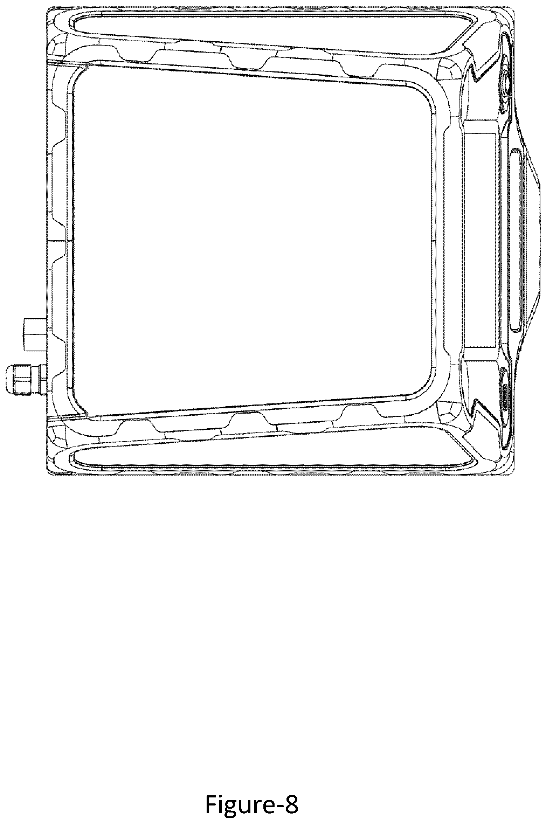

**Figure 8****:** Top side view of the system for performing shape and size analysis of all solid particles with image processing.

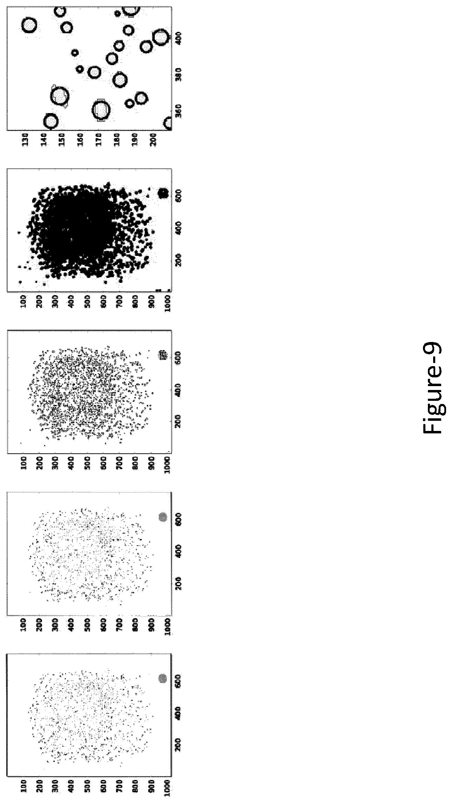

**Figure 9****:** Illustration of the analysis images obtained with the system.

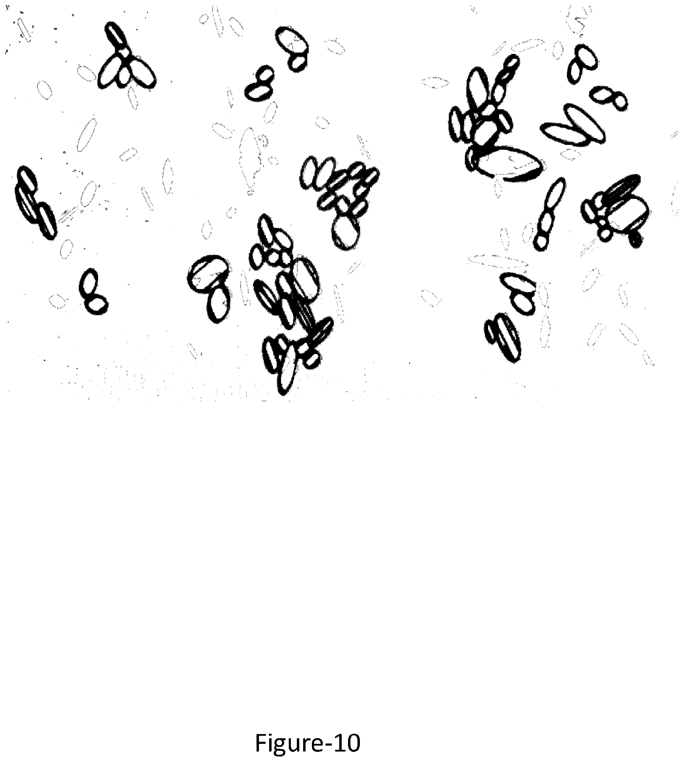

**Figure 10****:** Illustration of the analysis images obtained with the system.

### Reference Numerals:

**1.** Image processing box
**2.** Analysis tray
**3.** Light
**4.** Micro-board
**5.** LCD screen
**6.** Button
**7.** USB connection point
**8.** Power cord output point
**9.** Ethernet Port
**10.** Rail
**11.** Front cover
**12.** Camera
**13.** Light homogenizer

### Detailed Description of the Invention

The present invention relates to the system and the method of performing shape and size analysis of all solid particles with image processing.

The system developed with the invention includes an image processing box (1) that houses the analysis equipment and prevents outside light from entering the environment; analysis tray (2) that ensures that the solid particles are distributed in a distributed manner suitable for image processing and that can be places at different levels using the rail; light (3) that provides homogeneous, reproducible and adjustable light; micro-board (4) that runs camera (12), LCD screen (5) that provides instant reporting of analysis reports based on local computations to the user and manages the system is carried out, provides communication to the server; button (6) to turn the whole system off and on; server that monitors the number of analyzes and performs all computational processes in order to manage the number of analysis users, transfers the analysis results to the system, transmits instant reports to the user, and transmits detailed reports to the user via e-mail, controls the number of analyzes and the type of tests that can be performed according to the user's membership type, and prevents errors caused by the overlapping of solid particles after they are placed on the analysis tray (2); USB connection point (7); power cord output point (8); ethernet port (9) which helps to connect to the internet or networks in a wired way; rail (10) allows the analysis tray (2) to be placed at different levels according to the different shape and sizes of the sample; front cover (11) which allows the user to open the analysis tray (2) and place it; camera (12) that takes a picture of solid particles on the analysis tray (2), sends picture of solid particles to the server to analyze, prevents the reflection of light (3) on itself by using a light homogenizer (13), and running by the micro board (4); and a light homogenizer (13) that prevents the light from being propagated improperly and reflected back to the camera (12).

The image processing box (1) houses all of the analysis equipment and prevents outside light from entering the environment. The image processing box (1) includes an analysis tray (2), light (3), micro-board (4), LCD screen (5), button (6), USB connection point (7), power cord output point (8), ethernet port (9), rail (10), front cover (11), camera (12) and light homogenizer (13).

The analysis tray (2) ensures that the solid particles are suitable for image processing to match the focus of the camera. Light (3) provides homogeneous and reproducible light. Light (3) can be LED light. The micro board (4) runs all the software and manages the camera (13).

LCD screen (5) provides instant reporting of analysis reports to the user and provides a UI to the user for device management and post-analysis of the results on the screen. In addition, the management of the system is carried out via the LCD screen (5). There is also a button (6) to enable the system to be cut off and turned on.

The system developed with the invention works in two modes. These modes are the state with an internet connection and the state without an internet connection. In case the system does not have an internet connection, all software is calculated in the local processor and the results are saved to USB. Pre-defined simpler analyzes are also reflected on the LCD screen (5).

If the system has an internet connection, the server is always on and is set to receive and give information from the users. The server monitors the number of analyzes and performs all computational processes in order to manage the number of analysis users. In addition, the server transfers the analysis results to the system, transmits instant reports to the user, and transmits detailed reports to the user via e-mail. The server also monitors the number of analyzes and the type of tests that can be performed according to the user's membership type. Membership types can be unlimited membership, per image analysis membership.

If the quota and membership type in the user account is suitable, the image processing system is called to perform the analysis. The device does not work in stand-alone situations.

In order for the user to be able to use the system, the user must obtain a password at the end of membership and inform the relevant e-mail address. The password is entered using the LCD screen (5) before analysis. This password is analyzed by the server and is used to detect the origin of the analysis request and as a precaution against cyberattacks. Meanwhile, the server compares the requests from various places with the user password.

The specified e-mail address is used to send reports after analysis. Information and visuals requested by the user and signed up are also sent via e-mail.

Before the analysis, the user places the calibration paper containing the QR codes and sample images sent to the user on the analysis tray (2) and runs the calibration mode by the processor. The light homogenizer (13) is used to prevent the light (3) from spreading incorrectly and reflecting to the camera.

The camera (12) takes a picture of solid particles on the analysis tray (2) and sends it to the server to analyze.

Afterward, the user takes the dust of the solid particles that the user wants to analyze during use and places them in the measuring cup. By removing dust from solid particles using a sieve, placing more than necessary particles in the analysis tray (2) is prevented. The user places the solid particles free from dust on the shelf by spreading them over as wide an area as possible in the analysis tray (2). As can be seen in Figure-3, samples are placed on different rails (10) according to sample size and shape. After the analysis tray (2) is placed on the shelf, the user enters some special selections or requests regarding the analysis via the LCD screen (5).

Then, the server crops the relevant part of the image and filters out the background. After the background is filtered, the objects in the image are counted and the areas are determined. Circular shapes like ellipses or oval shapes are positioned in the designated areas. The areas and coverage ratios of the positioned circular shapes like ellipses or oval shapes are determined. Afterward, in cases where the difference between the area of the ellipse areas and the area of the object is high, the solid particles are divided. This iteration continues until the fit between the ellipse area and the divided object area is achieved. Afterward, the length and types of solid particles are reported and counted according to the major and minor axes of the ellipse and finally, a report is made and delivered to the customer. Note various different shapes, including squares, circles and rectangles, can be used for such purposes; but circular shapes like ellipses or oval shapes are found to be more suitable for such applications due to their flexibility and convenience to many different solid particles in the industry.

In cases where there is no internet connection on the system, the user cannot perform verification or auditing steps and the invention cannot be used if the user lacks the offline subscription. When the analysis is selected on the LCD screen (5), the server is run on the local processor and the results are reported.

The system developed with the invention provides the user to convey some requests before the analysis. Those requests might be related to the detail of the analysis or further specification of the material to favor the accuracy of the computations at the algorithm level. The suitability of the analysis environment is checked and control loops that the customer is using the product correctly by the processor. Such control loops are included in the local computer to ensure an algorithm-compatible image of the tray, regardless of online or offline mode. The local computer first tests the correctness of the amount and direction of light by operating the system with an A4 size paper. The user puts A4 paper on an empty tray with a pre-defined QR code and sample images to ensure a clear image. Then, the user determines that the image is processed correctly on the A4 size paper prepared for calibration purposes. Once the clarity of the picture is not ensured, besides algorithm updates, the user is warned to use a different tray height for the analysis. Afterward, the user completes the calibration of the system by performing a dimensional analysis of the reference solid particles, the sizes of which vary within a certain range, that come with the system in order to take accurate measurements. The device is tested to report and/or export data via the USB connection point (8) in the step of checking the operation of the system during the installation phase.

The user can also check whether the product is working correctly while using it. Firstly, by processing the image of the QR code on the analysis paper, it is determined that the correct analysis tray (2) is used. If the QR codes match, the correct analysis tray (2) is being used. Then, it is determined how widely the catalyst particles are spread. If the agglomeration of particles is too great, it is recommended that the customer redistribute. Finally, dust particles on the paper are detected and the user is asked to put a dust-free sample in the step of checking whether the user has done the analysis correctly. A specific tray with small gaps to remove particles of smaller size than the corresponding camera resolution is also included in the invention. Thus, each analysis sample essentially becomes dust-free.

If it is determined that the environment is suitable for analysis, the image is transferred to the server or calculated locally by the processor. In brief, the processor transmits the image to the server over the network. Visual and numerical reports related to the processed and analyzed image are transferred to the customer via the LCD screen (5) by the processor.

The system developed with the invention includes a cable entry point that allows receiving electricity from outside, parts and electronic circuits that provide power distribution, ethernet cable input, a button (6) to turn the system off and on, a shelf structure for placing trays at different levels, light (3) and related transformer providing homogeneous lighting, image the capture camera (12), a USB port for outputting the report.

## Claims

1. A system for performing shape and size analysis of all solid particles with image processing, **characterized by** comprising:
• A server that monitors the number of analyzes and performs all computational processes in order to manage the number of analysis users, transfers the analysis results to the system, transmits instant reports to the user, and transmits detailed reports to the user via e-mail, controls the number of analyzes and the type of tests that can be performed according to the user's membership type, and prevents errors caused by the overlapping of solid particles after they are placed on the analysis tray (2),
• An analysis tray (2) that ensures that the solid particles are distributed in a distributed manner suitable for image processing, that can be placed at different levels using the rail (10),
• A processor that provides visual and numerical reports related to the processed and analyzed image are transferred to the customer via the LCD screen (5),
• A light (3) that provides homogeneous, reproducible, and adjustable light,
• A camera (12) that takes a picture of solid particles on the analysis tray (2), sends pictures of solid particles to the server to analyze and prevents the reflection of light (3) on itself by using a light homogenizer (13) and running by the micro board (4).

2. A system for performing shape and size analysis of all solid particles with image processing according to claim 1, **characterized in that** it comprises the processor runs the calibration mode.

3. A system for performing shape and size analysis of all solid particles with image processing according to claim 1, **characterized in that** it comprises the processor checking the suitability of the analysis environment.

4. A system for performing shape and size analysis of all solid particles with image processing according to claim 1, **characterized in that** it comprises the user's memberships are flexible to the company policy and might include further restrictions on online/offline mode, number of analyses, analysis type.

5. A system for performing shape and size analysis of all solid particles with image processing according to claim 1, **characterized in that** it comprises the image processing box (1) that houses the analysis equipment and prevents outside light from entering the environment.

6. A system for performing shape and size analysis of all solid particles with image processing according to claim 1, **characterized in that** it comprises analysis tray (2) are placed on different rails (10) according to the sample size and shape.

7. A system for performing shape and size analysis of all solid particles with image processing according to claim 1, **characterized in that** it comprises the light (3) that provides homogeneous and repeatable light.

8. A system for performing shape and size analysis of all solid particles with image processing according to claim 1, **characterized in that** it comprises rail (10) and allows the analysis tray (2) to be placed at different levels.

9. A system for performing shape and size analysis of all solid particles with image processing according to claim 1, **characterized in that** it comprises ethernet port (9) which helps to connect to the internet or networks in a wired way.

10. A system for performing shape and size analysis of all solid particles with image processing according to claim 1, **characterized in that** it comprises an LCD screen (5) that provides instant reporting of analysis reports to the user and manages the system is carried out.

11. A system for performing shape and size analysis of all solid particles with image processing according to claim 1, **characterized in that** it comprises the button (6) that enables the system to be cut off and turned on.

12. A system for performing shape and size analysis of all solid particles with image processing according to claim 1, **characterized in that** the light (3) is a LED.

13. A method for performing shape and size analysis of all solid particles with image processing running by the server, **characterized in that** it comprising steps:
• Analyzed the password using the LCD screen (5) by the user before analysis to detect the origin of the analysis request and as a precaution against cyberattacks,
• Placing by the user the calibration paper containing the QR codes and sample images on the analysis tray (2),
• Running the calibration mode,
• Determining whether the light (3) and the camera (12) are placed improperly by using a light homogenizer (13),
• checking the operation of the system during the installation phase,
• checking whether the user has done the analysis correctly,
• taking the dust of the solid particles by the user,
• placing the non- dusted solid particles in the measuring cup,
• placing the solid particles free from dust on the shelf using a sieve by spreading them over as wide an area as possible in the analysis tray (2)
• entering some special selections or requests regarding the analysis via the LCD screen (5),
• cropping the relevant part of the image and filtering out the background via the server,
• Positioning circular shapes in the designated areas,
• Reporting the length and types of solid particles and counting according to the major and minor axes of the ellipse,
• Reporting to the user the visual and numerical results related to the processed and analyzed image via the LCD screen (5).

14. A method for performing shape and size analysis of all solid particles with image processing according to claim 13, in the step of positioning circular shapes are in the step of positioning circular shapes are wherein the circular shapes are ellipses, oval shape.

15. A method for performing shape and size analysis of all solid particles with image processing according to claim 13, in the step of checking the operation of the system during the installation phase **characterized in that** by comprising steps:
• Putting A4 size paper on an empty analysis tray (2),
• Testing the correctness of the amount and direction of light (3) by operating the system with an A4 size paper,
• Determining the image is processed correctly on the A4 size paper prepared for calibration purposes,
• Completing the calibration of the system by performing a dimensional analysis of the reference solid particles by the processor,
• Testing the system to report and/or export data via the USB connection point (7).

16. A method for performing shape and size analysis of all solid particles with image processing according to claim 13, in the step of checking whether the user has done the analysis correctly; **characterized in that** by comprising steps:
• processing the image of the QR code on the analysis paper,
• Checking whether the QR codes match the processor,
• Determining how widely the catalyst particles are spread,
• Recommending that the customer redistribute if the agglomeration of particles is too great,
• Detecting dust particles on the paper,
• Asking to put a dust-free sample in the step of checking whether the user has done the analysis correctly.
